(19) Europäisches Patentamt
European Patent Office
Office européen des brevets

(11) EP 3 325 536 B1

(12) # FASCICULE DE BREVET EUROPEEN

(45) Date de publication et mention de la délivrance du brevet:
**26.06.2024 Bulletin 2024/26**

(21) Numéro de dépôt: **16757297.3**

(22) Date de dépôt: **21.07.2016**

(51) Classification Internationale des Brevets (IPC):
***C08G 65/40*** *(2006.01)* ***C08L 71/00*** *(2006.01)*

(52) Classification Coopérative des Brevets (CPC):
(C-Sets disponibles)
**C08K 3/32; C08G 65/40; C08G 65/4012; C08L 71/00;** C08G 2650/40 (Cont.)

(86) Numéro de dépôt international:
**PCT/FR2016/051895**

(87) Numéro de publication internationale:
**WO 2017/013369 (26.01.2017 Gazette 2017/04)**

(54) **PROCÉDÉ DE STABILISATION D'UNE COMPOSITION A BASE DE POLYARYLENE-ETHER-CETONE (PAEK)**

VERFAHREN ZUR STABILISIERUNG EINER POLYARYLETHERKETON (PAEK) ZUSAMMENSETZUNG

PROCESS FOR STABILIZING A COMPOSITION OF POLYARYL-ETHER-KETONE (PAEK)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2015 FR 1556931**

(43) Date de publication de la demande:
**30.05.2018 Bulletin 2018/22**

(73) Titulaire: **Arkema France**
**92700 Colombes (FR)**

(72) Inventeurs:
- **LE, Guillaume**
  **14460 Colombelles (FR)**
- **BUSSI, Philippe**
  **78600 Maisons Laffitte (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A2- 0 308 803**
**GB-A- 1 446 962**
**US-A- 4 593 061**
**US-A- 4 874 839**
**US-A- 5 063 265**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 325 536 B1

(52) Classification Coopérative des Brevets (CPC):
(Cont.)

C-Sets
**C08L 71/00, C08K 3/32**

## Description

L'invention concerne le domaine des polyarylène-éther-cétones.

Plus particulièrement, l'invention concerne un procédé de stabilisation à l'état fondu, d'une composition à base de PAEK.

[Art antérieur]

Le terme générique de polyarylène-éther-cétone (PAEK) désigne une famille de polymères très performants à propriétés thermomécaniques élevées. Ces polymères sont constitués de noyaux aromatiques liés par un atome d'oxygène (éther) et/ou par un groupe carbonyle (cétone). Leurs propriétés dépendent principalement du rapport éther/cétone. Dans les abréviations utilisées pour nommer les matériaux de la famille des PAEK, la lettre E désigne une fonction éther et la lettre K désigne une fonction cétone. Dans la suite de la description, ces abréviations seront utilisées à la place des noms d'usage pour désigner les composés auxquels elles se rapportent.

La famille des PAEK regroupe plus particulièrement le poly-éther-cétone (PEK), le poly-éther-éther-cétone (PEEK), le poly-éther-éther-cétone-cétone (PEEKK), le poly-éther-cétone-cétone (PEKK), le poly-éther-cétone-éther-cétone-cétone (PEKEKK), le poly-éther-éther-cétone-éther-cétone (PEEKEK), le poly-éther-éther-éther-cétone (PEEEK) et le poly-éther-diphényle-éther-cétone (PEDEK).

Ces polymères sont utilisés pour des applications contraignantes en température et/ou en contraintes mécaniques, voire chimiques. On retrouve ces polymères dans des domaines aussi variés que l'aéronautique, les forages off-shore, les implants médicaux. Selon leur nature et leurs applications, ils peuvent être mis en oeuvre par différentes techniques connues, telles que le moulage, l'extrusion, le moulage par compression, le compoundage, l'injection, le calandrage, le thermoformage, le rotomoulage, l'imprégnation, le frittage laser ou encore le modelage par dépôt de matière en fusion (FDM) par exemple, à des températures comprises en général entre 320 et 430°C.

Les PAEK présentent des températures de fusion élevées, typiquement supérieures à 300°C. Par conséquent, pour pouvoir être mis en oeuvre, ils doivent être fondus à haute température, typiquement supérieure à 320°C, de préférence supérieure à 350°C, et plus généralement à une température de l'ordre de 350 à 390°C. Ces températures dépendent bien évidemment des structures PAEK considérées et des viscosités. Dans l'état de l'art, on considère qu'il faut fondre les PAEK à une température supérieure d'au moins 20°C à la température de fusion du PAEK considéré.

Cependant, à de telles températures de mise en oeuvre, les PAEK fondus ne sont pas stables vis-à-vis de la thermo-oxydation si on n'optimise pas leur composition et/ou en l'absence d'additifs permettant de stabiliser la structure. On assiste alors à des phénomènes d'évolution de la structure soit par des mécanismes de coupure et/ou d'allongement de chaines induits par des branchements et/ou des couplages à partir de fins de chaines ou des défauts. Ces défauts peuvent venir de réactions d'oxydation, sous l'effet de la température et du dioxygène de l'atmosphère ou déjà présent dans le polymère. Ces évolutions de structure peuvent aller jusqu'à la réticulation du polymère et aussi conduire à des dégagements de composés, parmi lesquels on peut citer le dioxyde de carbone ($CO_2$), le monoxyde de carbone (CO), des phénols et des éthers aromatiques. Ces phénomènes d'évolution de structure entrainent une dégradation des propriétés physicochimiques et/ou mécaniques des PAEK et une évolution de leur viscosité à l'état fondu. Ces évolutions rendent plus difficile la mise en oeuvre de ces polymères à l'état fondu, induisant par exemple des variations non seulement dans les paramètres de fonctionnement des machines utilisées pour la transformation des polymères, mais aussi dans l'aspect et les dimensions des produits obtenus après transformation.

Des solutions ont déjà été envisagées pour stabiliser les compositions de PAEK à l'état fondu, mais elles ne donnent pas entière satisfaction à ce jour.

Le document US5 208 278 décrit l'utilisation de bases organiques pour stabiliser des PAEK. Selon les auteurs de ce document, ces bases organiques permettent de capter l'acidité dans le polymère. Des exemples montrent une meilleure stabilité de la viscosité à l'état fondu, mais toujours en milieu confiné, c'est-à-dire en l'absence d'un environnement avec du dioxygène. D'autre part, l'utilisation de ces bases organiques est problématique car elles peuvent s'évaporer et/ou elles génèrent des composés organiques volatils aux températures de transformation des PAEK.

Les stabilisants, de type oxydes métalliques, tels que décrits dans le document US3925307 ou les aluminosilicates, tels que décrits dans le document US4593061 permettent eux aussi de capter l'acidité mais ne permettent pas d'améliorer suffisamment la stabilité du polymère fondu vis-à-vis de la thermo-oxydation et peuvent générer eux-mêmes des évolutions de structure. D'autre part, pour atteindre une stabilité suffisante, il faut ajouter des quantités très importantes de ces additifs qui peuvent alors avoir aussi une action de charge impactant les propriétés du polymère et sa mise en oeuvre.

Les documents US5 063 265, US 5 145 894 et WO2013/164855 décrivent l'utilisation de composés organophosphorés aromatiques pour stabiliser des compositions de PAEK fondues soit utilisés seuls ou en synergie avec un autre additif. Le document US5 063 265 décrit par exemple l'utilisation d'un phosphonite, et plus particulièrement du [1,1-biphényl]-4,4'-diylbisphosphonite de tétrakis (2,4-di-ter-butylphényle), noté par la suite PEP-Q, et d'un acide organique pour stabiliser des PAEK. De tels composés organophosphorés présentent un degré d'oxydation peu élevé. Ils sont typiquement dans un état d'oxydation 2 ou 3, et jouent par conséquent le rôle de réducteur des groupes peroxydes dans le polymère fondu. Un inconvénient majeur de ces composés organophosphorés aromatiques, tels que les phosphonites ou les phosphites par exemple, réside dans le fait qu'ils sont sensibles à l'hydrolyse et de ce fait, il est très difficile de les incorporer par voie aqueuse ou au cours d'un procédé de synthèse. D'autre part, ils ne sont pas suffisamment stables aux températures de transformation si bien qu'ils se dégradent en générant l'émission de composés organiques volatils.

Or, par exemple dans le domaine de la fabrication de composites structuraux par imprégnation, trois voies principales sont possibles :

- soit on imprègne en fondant le polymère au-dessus de sa température de fusion et souvent en présence d'air. On comprend ainsi que la matrice polymère ne doit pas être trop sensible aux phénomènes de thermo-oxydation. D'autre part, si il y a génération de composés organiques volatils, cela peut conduire à des défauts au niveau de l'imprégnation, avec formation de porosités dommageables pour les propriétés du matériau composite final,

- soit on utilise une voie solvant. Cependant, les PAEK ne sont solubles que dans quelques solvants organiques, en général très acides, ou à chaud dans des solvants lourds tels que le diphénylsulfone. En plus de la difficulté d'utiliser ce type de solvant, il est très difficile de l'éliminer complètement, ce qui peut générer les mêmes difficultés que les composés organiques volatils.

- ou enfin, on utilise plus généralement une suspension aqueuse de poudre de PAEK, tel que décrit le document intitulé « Wet imprégnation as route to unidirectional carbon fibre reinforced thermoplastic composites manufacturing », K.K.C.Ho & al, Plastics, Rubber and composites, 2011, Vol. 40, N°2, p.100- 107. Ainsi on utilise par exemple une suspension de poudre de PEKK et d'un agent tensio-actif que l'on dépose sur des fibres de carbone ou de verre par exemple. Les fibres sont passées dans un four pour évaporer l'eau puis dans une filière à haute température, typiquement supérieure à 400°C, de manière à ce que le polymère fonde et enrobe les fibres de carbone. Les rubans pré-imprégnés obtenus sont ensuite utilisés pour former des objets composites en les chauffant à nouveau à haute température.

Par conséquent, le fait que le stabilisant soit sensible à l'hydrolyse et se dégrade thermiquement pose problème lors de son incorporation dans le polymère fondu et/ou lors de la mise en oeuvre, à haute température, du polymère. De plus, les composés organiques volatils qui se dégagent lors de la dégradation du stabilisant, sont malodorants, néfastes pour l'environnement et/ou la santé et créent des porosités dans le matériau composite en fabrication, entrainant des défauts mécaniques dans la pièce composite finie. Enfin, lors d'une imprégnation de fibres, les composés organiques volatils émis peuvent en outre gêner l'enrobage des fibres et générer des défauts mécaniques importants dans les objets qui en résultent.

Le document WO9001510 décrit un traitement d'une poudre de polymère de la famille des PAEK dans une solution aqueuse d'un sel de phosphate, à haute température et sous pression pendant 3 heures pour réduire le taux d'impuretés. Le polymère ainsi traité est ensuite filtré et lavé à l'eau trois fois, puis séché pendant 16 heures. Rien n'indique, dans ce document, que le sel de phosphate, qui est soluble dans l'eau, reste effectivement dans la poudre de polymère. De plus, le traitement décrit est lourd et long à mettre en oeuvre et est très différent d'une additivation. Enfin, rien ne dit dans ce document, qu'il est efficace contre le phénomène de thermo-oxydation puisque la stabilité n'est évaluée qu'en milieu confiné. Les sels de phosphates sont en effet connus pour être utilisés dans d'autres matrices polymères, telles que des polysulfones, ou des polychlorures de vinyl par exemple, pour capter l'acidité et les chlorures contenus dans le polymère. De telles utilisations sont par exemple décrites dans les documents US3 794 615 ou EP0933 395 ou encore US2013/0281587 mais là aussi il n'est pas décrit d'action stabilisante en présence d'air.

[Problème technique]

L'invention a donc pour but de proposer un procédé de stabilisation à l'état fondu, d'une composition à base de PAEK, vis-à-vis des phénomènes de thermo-oxydation et pas uniquement sous le seul effet de la température.

[Brève description de l'invention]

De manière surprenante, il a été découvert qu'un procédé de stabilisation d'une composition à base de Polyarylène-éther-cétone (PAEK), ledit procédé comprenant une étape d'incorporation d'un agent stabilisant vis-à-vis de phénomènes de thermo-oxydation, ledit procédé étant caractérisé en ce que l'agent stabilisant incorporé est un sel de phosphate, ou un mélange de sels de phosphate, permet l'obtention d'une composition à base de PAEK qui présente

une très grande stabilité à l'état fondu vis-à-vis de la thermo-oxydation, même en présence d'air, sans dégagement de composés volatils organiques, le stabilisant utilisé étant très stable à haute température, typiquement supérieure à 350°C, et insensible à l'hydrolyse. Les sels de phosphate étant majoritairement solubles dans l'eau leur incorporation dans la composition à base de PAEK s'en trouve facilitée.

Avantageusement, l'incorporation du sel de phosphate dans la composition à base de PAEK est réalisée par l'une des techniques suivantes : mélangeage à sec (dry blend), compoundage, imprégnation humide ou au cours du procédé de synthèse du polymère PAEK.

Selon d'autres caractéristiques du procédé :

- le, ou les, sel(s) de phosphate est (sont) choisi(s) parmi au moins l'un des sels suivants : un (des) sel(s) de phosphate d'ammonium, de sodium, de calcium, de zinc, de potassium, d'aluminium, de magnésium, de zirconium, de baryum, de lithium, ou de terres rares,

- le, ou les, sel(s) de phosphate est (sont) plus particulièrement choisi(s) parmi au moins l'un des composés suivants : phosphate monosodique anhydre, monohydraté ou dihydraté, phosphate disodique anhydre, dihydraté, heptahydraté, octahydraté, ou dodécahydraté, phosphate trisodique anhydre hexagonal, anhydre cubique, hémihydraté, hexahydraté, octahydraté, dodécahydraté, dihydrogénophsophate d'ammonium,

- le(s) sel(s) de phosphate est (sont) un (des) sel(s) de phosphate organométallique(s), et présentent la formule suivante :

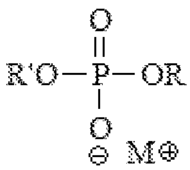

  dans laquelle R est différent ou non de R', R et R' étant formés par un ou plusieurs groupements aromatiques substitués ou non par un ou plusieurs groupements possédant de 1 à 9 carbones, R et R' pouvant être directement liés entre eux ou séparés par au moins un groupement choisi parmi les groupement suivants : -CH2- ; -C(CH3)2- ; -C(CF3)2- ; -SO2- ; -S-, -CO- ; -O- et M représente un élément du groupe IA ou IIA de la classification périodique,

- le sel de phosphate organométallique est le phosphate de sodium 2,2'-methylene-bis-(4,6-di-tert-butylphenyl),

- le sel de phosphate est incorporé dans la composition avec des proportions comprises entre 10ppm et 50000ppm, de préférence entre 100 et 5000ppm,

- la composition à base de PAEK est plus particulièrement une composition à base de l'un des polymères suivants : PEKK, PEEK, PEEKK, PEKEKK, PEEEK ou PEDEK,

- la composition à base de PAEK est plus particulièrement une composition de poly-éther-cétone-cétone (PEKK),

- la composition à base de PAEK est plus particulièrement une composition à base de PEKK, et comprend, en plus du PEKK, l'un au moins des polymères suivants : PEK, PEEKEK, PEEK, PEEKK, PEKEKK, PEEEK, PEDEK, avec une teneur de moins de 50% massique de la composition, de préférence inférieure ou égale à 30% massique de la composition.

D'autres avantages et caractéristiques de l'invention apparaitront à la lecture de la description suivante donnée à titre d'exemple illustratif et non limitatif, en référence aux Figures annexées qui représentent :

- la Figure 1, une courbe de la viscosité complexe mesurée par un rhéomètre oscillatoire en fonction du temps, d'un produit de référence non stabilisé sous azote,

- la Figure 2, une courbe de thermogravimétrie en fonction de la température d'un stabilisant de référence utilisé à titre comparatif.

[Description de l'invention]

Les poly-arylène-éther-cétones (PAEK) utilisés dans l'invention comportent les motifs de formules suivantes:

(- Ar - X -) et (- $Ar_1$ - Y - )

dans lesquelles :

Ar et $Ar_1$ désignent chacun un radical aromatique divalent;

Ar et $Ar_1$ peuvent être choisis, de préférence, parmi le 1,3-phénylène, 1,4-phénylène, le 4,4'-biphénylène, le 1,4-naphthylène, le 1,5-naphthylène et le 2,6-naphthylène ;

X désigne un groupe électroattracteur ; il peut être choisi, de préférence, parmi le groupe carbonyle et le groupe sulfonyle,

Y désigne un groupe choisi parmi un atome d'oxygène, un atome de soufre, un groupe alkylène, tel que $-CH_2-$ et isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène.

Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :

- un poly-éther-cétone-cétone également nommé PEKK comprenant des motifs de formule I A, de formule I B et leur mélange :

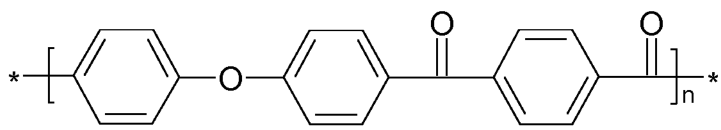

Formule I A

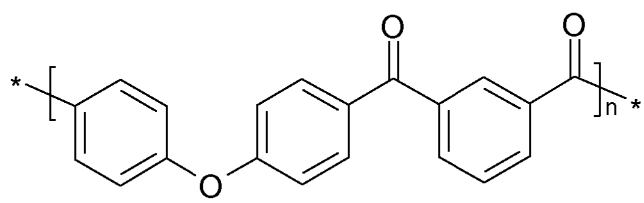

Formule I B

- un poly-éther-éther -cétone également nommé PEEK comprenant des motifs de formule IIA:

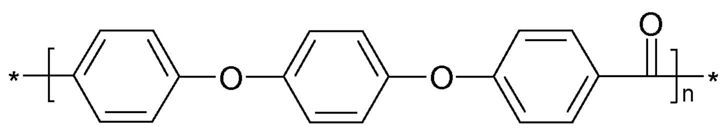

Formule IIA

De la même façon on peut introduire des enchaînements para dans ces structures au niveau des éthers et des cétones selon la formule IIB :

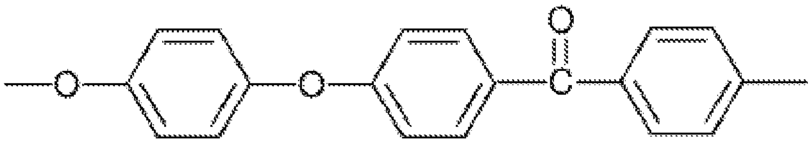

Formule IIB

L'enchainement peut être totalement para mais on peut introduire aussi des enchaînements méta partiellement ou totalement:

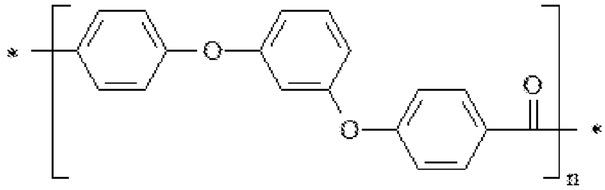

Formule III

Ou encore :

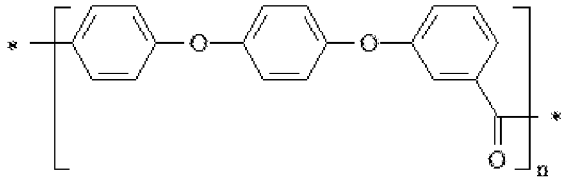

Formule IV

Ou des enchainements en ortho selon la formule V :

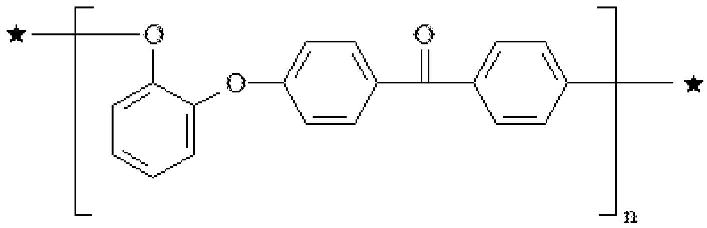

Formule V

- un poly-éther-cétone également nommé PEK, comprenant des motifs de formule VI :

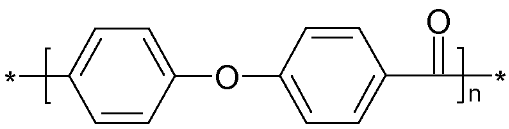

Formule VI

De la même façon, l'enchainement peut être totalement para mais on peut introduire aussi des enchaînements méta partiellement ou totalement (formules VII et VIII):

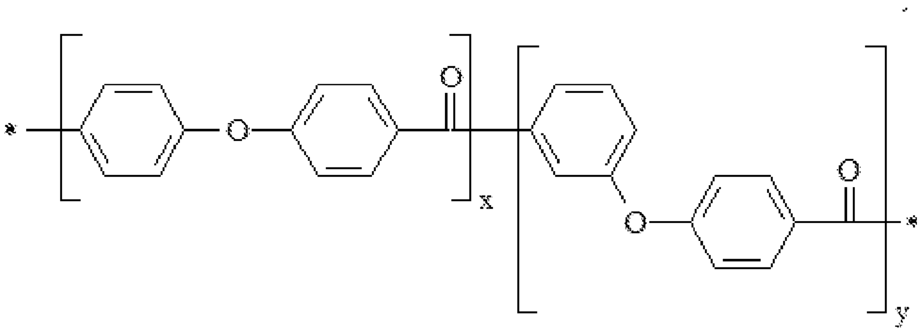

Formule VII

Ou

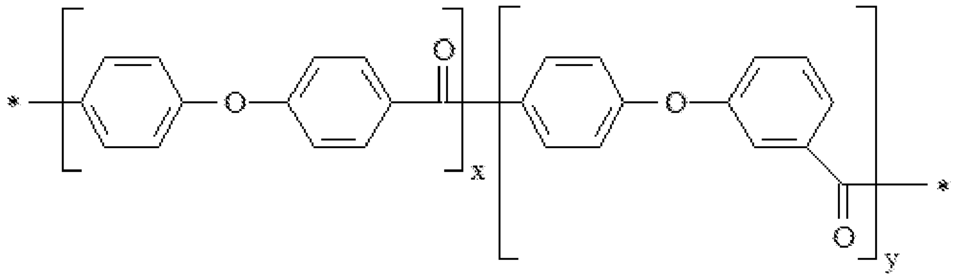

Formule VIII

- un poly-éther-éther-cétone-cétone également nommé PEEKK, comprenant des motifs de formules IX :

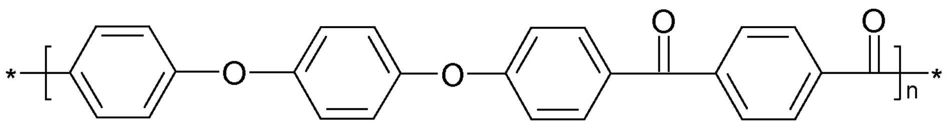

Formule IX

De la même façon on peut introduire des enchaînements méta dans ces structures au niveau des éthers et des cétones.

- un poly-éther-éther-éther-cétone également nommé PEEEK, comprenant des motifs de formules X :

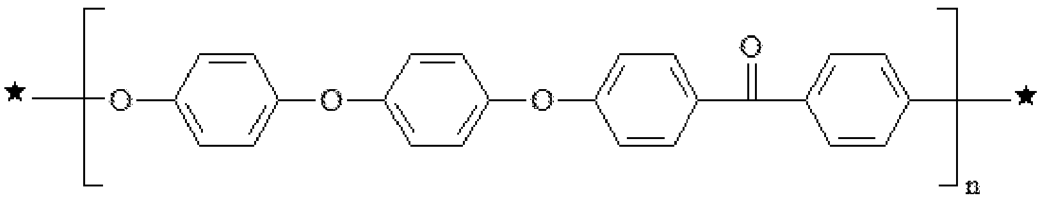

Formule X

De la même façon on peut introduire des enchaînements méta dans ces structures au niveau des éthers et des cétones mais aussi des enchaînements biphénols selon la formule XI :

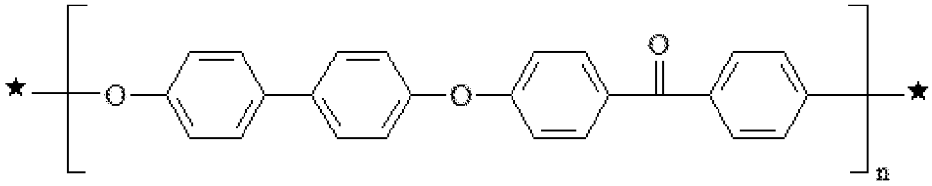 Formule XI

D'autres arrangements du groupe carbonyle et de l'atome d'oxygène sont également possibles.

La composition objet de l'invention est à base de PAEK. Plus particulièrement, la composition est une composition à base de poly-éther-cétone-cétone (PEKK).

Selon une variante de réalisation, la composition à base de PAEK peut également être une composition à base de l'un des polymères suivants : PEEK, PEEKK, PEKEKK, PEEEK ou PEDEK.

La composition à base de PAEK peut également être une composition à base d'un mélange de polymères de la famille des PAEK. Ainsi, la composition peut être à base de PEKK et comprendre, en plus du PEKK, l'un au moins des polymères suivants : PEK, PEEKEK, PEEK, PEEKK, PEKEKK, PEEEK, PEDEK, avec une teneur de moins de 50% massique de la composition, de préférence inférieure ou égale à 30% massique de la composition.

De manière avantageuse, la composition de PAEK selon l'invention est stable à l'état fondu grâce à l'incorporation d'un sel de phosphate dans la composition.

Dans la présente description, on entend par « polymère stable à l'état fondu », un polymère dont la structure évolue peu lorsqu'il est fondu, de sorte que ses propriétés physico-chimiques, notamment la viscosité, ne varient que dans un intervalle limité. Plus spécifiquement, on considérera un polymère comme stable à l'état de fusion sous azote lorsque l'évolution de sa viscosité à l'état fondu en 30 minutes, mesurée par un rhéomètre oscillatoire sous azote et avec une fréquence d'oscillation de 1 Hz, à 380°C ou 20°C au-dessus de sa température de fusion lorsque celle-ci est supérieure à 370°C, est inférieure à 100%, notamment inférieure à 50%, en particulier inférieure à 20%, et tout particulièrement comprise entre -20% et +20%. De même, on considérera un polymère comme stable à l'état de fusion sous air lorsque l'évolution de sa viscosité à l'état fondu en 30 minutes mesurée comme indiqué ci-dessus mais sous air et avec une fréquence d'oscillation de 0,1 Hz est inférieure à 150%, notamment inférieure à 100%, en particulier préférée inférieure à 50% et tout particulièrement comprise entre -20% et +50%.

Selon une variante, le stabilisant incorporé dans la composition peut être un mélange de sels de phosphate.

Il a en effet été découvert qu'un tel sel de phosphate permet de stabiliser une composition de PAEK à l'état fondu aussi bien sous azote que sous air. Cet effet de stabilisation du PAEK à l'état fondu sous air est très surprenant et il n'était pas du tout intuitif pour un homme du métier de choisir d'incorporer un sel de phosphate pour stabiliser un PAEK à l'état fondu vis-à-vis d'un phénomène de thermo-oxydation. Un sel de phosphate présente en effet un degré d'oxydation maximum si bien qu'il n'est pas connu pour être un antioxydant. Pourtant, en présence de l'oxygène de l'air, il arrive à stabiliser le polymère à l'état fondu vis-à-vis du phénomène de thermo-oxydation. On obtient en effet une viscosité, de la composition à l'état fondu, plus stable comparativement à une même composition dépourvue de sel de phosphate, ce qui signifie que les phénomènes d'allongement des chaines, par des phénomènes de branchement entre autres, sont plus limités.

Le sel de phosphate se présente donc comme un actif stabilisant des compositions de PAEK à l'état fondu, même en présence d'air, avec une efficacité aussi grande qu'un composé organophosphoré aromatique. Néanmoins, il présente en outre un avantage considérable par rapport à un composé organophosphoré aromatique car il ne s'hydrolyse pas et ne génère aucune émission de composé volatil organique. Seule de l'eau peut être générée dans certains cas où le sel de phosphate se présente sous une forme hydratée ou lorsque le sel de phosphate dimérise.

Avantageusement, un ou plusieurs sel(s) de phosphate peut (peuvent) être incorporé(s) dans la composition à base de PAEK. Le sel de phosphate est avantageusement choisi parmi un (des) sel(s) de phosphate d'ammonium, de sodium, de calcium, de zinc, d'aluminium, de potassium, de magnésium, de zirconium, de baryum, de lithium, ou de terres rares. De préférence, le(s) sel(s) de phosphate est (sont) un (des) sel(s) de phosphate inorganique ou organométallique.

Le(s) sel(s) de phosphate est (sont) plus particulièrement choisi(s) parmi au moins l'un des composés suivants : phosphate monosodique anhydre, monohydraté ou dihydraté, phosphate disodique anhydre, dihydraté, heptahydraté, octahydraté, ou dodécahydraté, phosphate trisodique anhydre hexagonal, anhydre cubique, hémihydraté, hexahydraté, octahydraté, dodécahydraté, et/ou dihydrogénophsophate d'ammonium.

Lorsque le sel de phosphate, ou mélange de sels de phosphate, utilisé est un (des) sel(s) de phosphate organométallique(s), celui-ci (ceux-ci) présente(nt) la formule suivante :

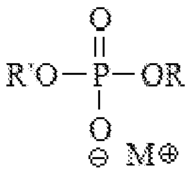

dans laquelle R est différent ou non de R', R et R' étant formés par un ou plusieurs groupements aromatiques substitués ou non par un ou plusieurs groupements possédant de 1 à 9 carbones, R et R' pouvant être directement liés entre eux ou séparés par au moins un groupement choisi parmi les groupement suivants : -CH2- ; - C(CH3)2- ; -C(CF3)2- ; -SO2- ; -S-, -CO- ; -O- et M représente un élément du groupe IA ou IIA de la classification périodique.

De manière davantage préférée, le sel de phosphate organométallique est le phosphate de sodium 2,2'-methylene-bis-(4,6-di-tert-butylphenyl).

Le sel de phosphate, ou le mélange de sels de phosphate, est incorporé dans la composition à base de PAEK dans des proportions comprises entre 10ppm et 50000ppm et, de manière encore plus préférée, entre 100 et 5000ppm.

Un autre effet surprenant lié à l'incorporation du sel de phosphate dans la composition à base de PAEK réside dans le fait qu'il permet d'agir en tant qu'agent nucléant. Augmenter la cinétique de cristallisation pour en faire un produit cristallisable dans des conditions standard de transformation, ou par exemple en frittage laser, et ainsi disposer d'un PEKK semi-cristallin, est avantageux pour certaines propriétés telles que la résistance chimique. De plus, un tel agent nucléant permet de contrôler la morphologie cristalline du polymère, et notamment la taille des zones cristallines (ou sphérolites), afin d'assurer une constance dans les propriétés mécaniques du polymère et ce, quelles que soient les conditions de mise en oeuvre du polymère.

L'invention se rapporte en outre à un procédé de stabilisation à l'état fondu, d'une composition à base de PAEK, ledit procédé comprenant une étape d'incorporation d'un agent stabilisant vis-à-vis des phénomènes de thermo-oxydation, ledit procédé étant caractérisé en ce l'agent stabilisant incorporé est un sel de phosphate, ou un mélange de sels de phosphate.

L'incorporation du sel de phosphate dans la composition à base de PAEK peut être réalisée par l'une des techniques suivantes : mélangeage à sec (encore connu sous la terminologie anglo-saxonne « dry blend »), compoundage, imprégnation humide ou au cours du procédé de synthèse du polymère PAEK.

Le procédé de synthèse d'un PAEK consiste généralement en une polycondensation. La synthèse peut se faire selon deux voies : une voie nucléophile, selon laquelle des liaisons éther se forment au cours de l'étape de polymérisation, ou une voie électrophile, selon laquelle des ponts carbonyle se forment pendant l'étape de polymérisation. Le PEKK par exemple, résulte d'une réaction de polycondensation de Friedel-Crafts entre le DPE (diphényl éther) et un chlorure de téréphthaloyl et/ou un chlorure d'isophthaloyl par exemple.

Lorsque la composition stabilisée à base de PAEK est obtenue par imprégnation de PAEK au cours de son procédé d'obtention, cette imprégnation du PAEK par une solution de sel(s) de phosphate est réalisée après la polymérisation du PAEK et avant son séchage. Le solvant est choisi pour qu'il puisse solubiliser le(s) sel(s) de phosphate métallique(s) tout en étant aussi soluble avec la phase solvant constituant au moins 50 % du grain de PAEK. Cette imprégnation est avantageusement réalisée sous agitation pour favoriser l'homogénéisation. Avantageusement, on choisit un PAEK humide d'eau et une solution aqueuse de sel(s) de phosphate métallique.

Avantageusement, la composition stabilisée à base de PAEK peut être obtenue sous forme de granulés par compoundage, sur un outil connu de l'homme de l'art, tel qu'une extrudeuse bi vis, un comalaxeur, ou un mélangeur interne.

La composition ainsi préparée, peut être ensuite transformée pour une utilisation ou une transformation ultérieure connue par l'homme de l'art à l'aide d'outils tels qu'une presse à injecter, une extrudeuse, équipement de frittage laser etc....

Le procédé de préparation de la composition selon l'invention peut aussi utiliser une extrudeuse bi-vis alimentant, sans granulation intermédiaire, une presse à injecter ou une extrudeuse selon un dispositif de mise en oeuvre connu par l'homme de l'art.

La composition stabilisée à base de PAEK peut aussi être obtenue sous forme de poudre, par malaxage à sec par exemple (plus connu sous la terminologie anglo-saxonne « Dry Blend »). Ainsi, le PAEK est mélangé avec le(s) sel(s) de phosphate puis ce mélange est chauffé au-dessus de la température de fusion du PAEK sous agitation dans un équipement adapté tel qu'une extrudeuse.

La composition stabilisée à base de PAEK peut aussi être obtenue par mélange humide. Pour cela, le PAEK séché est imprégné par une solution du ou des sel(s) de phosphate métallique(s). Cette solution est de préférence aqueuse si le(s) sel(s) de phosphate est (sont) soluble(s) dans l'eau. Le mélange se fait de préférence sous agitation pour favoriser l'homogénéisation. Puis l'ensemble est séché et le solvant est ainsi éliminé.

A partir de la composition obtenue qui peut être soit sous forme de granulés soit sous forme de poudre, il est

possible de fabriquer différents objets par une technique de frittage laser, d'injection ou d'extrusion, de thermoformage, de rotomoulage, de moulage par compression, ou encore d'imprégnation par exemple.

L'imprégnation par voie humide par exemple, pour fabriquer des rubans composites pré-imprégnés, encore dénommés sous leur terminologie anglo-saxonne « tape », consiste à déposer sur des fibres de carbone ou de verre par exemple, une dispersion aqueuse d'une poudre de PAEK et de sel(s) de phosphate. Plus particulièrement, la dispersion peut par exemple comprendre une poudre de PEKK et de sel(s) de phosphate et un agent tensioactif en solution aqueuse. Les fibres ainsi recouvertes de la dispersion aqueuse sont ensuite passées dans un four pour évaporer l'eau. Puis, elles sont passées dans une filière à haute température, typiquement supérieure à 370°C, afin de pouvoir faire fondre le polymère de PEKK stabilisé et qu'il puisse enrober les fibres correctement. Après refroidissement, on obtient des « tapes » ou rubans pré-imprégnés que l'on utilise ensuite en les assemblant et/ou en les superposant, pour les refondre et former des objets composites.

Un grand avantage des sels de phosphates réside dans le fait que même chauffés à très haute température, supérieure ou égale à 350°C par exemple, ils ne génèrent pas l'émission de composés organiques volatils mais ils perdent simplement de l'eau, sous forme de vapeur. Par conséquent, les sels de phosphates ne présentent aucun risque pour l'environnement et/ou la santé et ils ne créent pas de porosités susceptibles de gêner l'enrobage des fibres et/ou de générer l'apparition de défauts dans l'objet final fabriqué, susceptibles d'entrainer alors une dégradation des propriétés mécaniques.

La composition à base de PAEK et de sel(s) de phosphate telle que définie ci-dessus, peut être préparée par toute méthode connue, permettant l'obtention d'un mélange homogène contenant la composition selon l'invention et éventuellement d'autres additifs, charges, autres polymères. Une telle méthode peut être choisie parmi les techniques de dry blend (ou malaxage à sec utilisant par exemple un malaxeur à rouleau), d'extrusion à l'état fondu, de compoundage, ou encore d'imprégnation humide ou au cours du procédé de synthèse du polymère.

Plus particulièrement, la composition selon l'invention peut être préparée par mélange à l'état fondu de tous ses composants, notamment dans un procédé dit en direct.

Le compoundage, par exemple, est un processus qui permet de mélanger par fusion des matières plastiques et/ou des additifs et/ou des charges. Pour fabriquer la composition, les matières premières, se présentant sous forme de granulés, sont disposées dans une extrudeuse co-rotative bi-vis.

Les exemples suivants illustrent de façon non limitative la portée de l'invention :

<u>Exemple 1 : mesures de viscosité sous azote</u>

Plusieurs compositions à base de PEKK ont été préparées. Une composition témoin $C_T$ de PEKK ne comportant aucun stabilisant a été préparée par un procédé de synthèse classique par réaction de polycondensation.

Une deuxième composition à base de PEKK, référencée C1, a été préparée par imprégnation humide, dans laquelle du PEP-Q ([1,1-biphényl]-4,4'-diylbisphosphonite de tétrakis (2,4-di-ter-butylphényle)), de formule (1) ci-dessous, a été incorporé à hauteur de 1000ppm. Ce phosphonite est utilisé à titre d'exemple comparatif pour stabiliser la composition de PEKK.

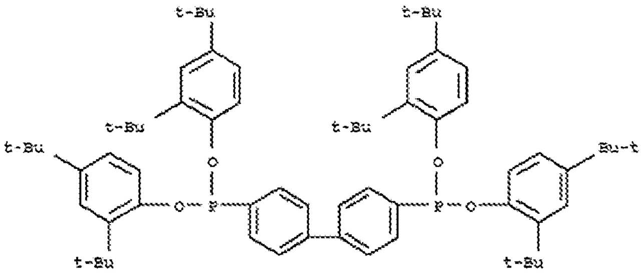

(1)

Une troisième composition à base de PEKK, référencée C2, a été préparée par imprégnation aqueuse, dans laquelle du phosphate monosodique anhydre ($NaH_2PO_4$), encore dénommé dihydrogénophosphate de sodium, de formule (2) ci-dessous a été incorporé à hauteur de 1000ppm.

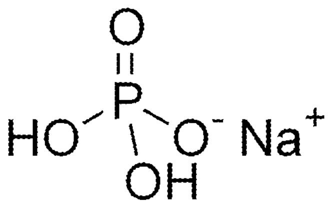

(2)

Une quatrième composition à base de PEKK, référencée C3, a été préparée de la même façon que les deuxième et troisième compositions, par imprégnation aqueuse, dans laquelle du trimétaphosphate de sodium ($Na_3P_3O_9$), encore dénommé phosphate trisodique anhydre, de formule (3) ci-dessous, a été incorporé à hauteur de 1000ppm.

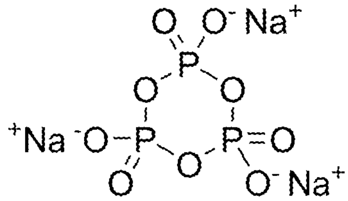

(3)

Une cinquième composition à base de PEKK, référencée C4 a été préparée de la même façon que les compositions précédentes, par imprégnation avec l'acétone, dans laquelle un phosphate organique, et plus particulièrement du triphénylphosphate de formule (4) ci-dessous, a été incorporé à hauteur de 1000ppm.

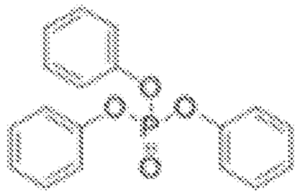

(4)

La viscosité à l'état fondu de ces compositions $C_T$ à C4 a ensuite été mesurée, avec un rhéomètre oscillatoire en fonction du temps, à 380°C, sous azote, avec une fréquence d'oscillation, encore dénommée sollicitation, de 1Hz, et avec une amplitude de déformation de 0,5%.

La courbe de la Figure 1 représente la viscosité de la composition témoin $C_T$ de PEKK, mesurée de cette manière. A partir de la viscosité initiale et de la viscosité au bout d'une durée de 30 minutes, on calcule alors la stabilité du polymère dans le temps, exprimée en pourcentage d'évolution de la viscosité (EV %), à 380°C. La stabilité du polymère est alors calculée selon la formule suivante :

$$\%EV = (\text{viscosité à 30min-viscosité initiale})/\text{viscosité initiale} * 100$$

Il ressort de la courbe de la Figure 1 que la stabilité, exprimée en pourcentage d'évolution de la viscosité EV, de la composition témoin $C_T$ à base de polymère à base de PEKK, sous azote avec une sollicitation de 1Hz, est égale à 160%.

Le tableau I ci-dessous regroupe les données de stabilité (EV%) sous azote des différentes compositions $C_T$ à C4 obtenues par imprégnation humide avec ou sans stabilisant.

**Tableau I**

| Référence | composition | EV (%) (sous N2, 1Hz) |
|---|---|---|
| CT | PEKK de référence | 160% |
| C1 | 1000ppm PEP-Q | 50% |
| C2 | 1000ppm de phosphate monosodique anhydre | 50% |
| C3 | 1000ppm de phosphate trisodique anhydre | 50% |

(suite)

| Référence | composition | EV (%) (sous N2, 1Hz) |
|---|---|---|
| C4 | 1000ppm de triphénylphosphate | 110% |

Il ressort des résultats présentés dans le tableau I que la présence d'un sel de phosphate dans une composition à base de PEKK, permet d'avoir une composition à l'état fondu qui présente une viscosité plus stable dans le temps, contrairement à la composition témoin CT dont la viscosité augmente rapidement avec le temps, indiquant des allongements de chaines et donc des évolutions importantes des caractéristiques du polymère.
Le phosphate organique (dans la composition C4), même s'il présente un effet moindre par rapport aux sels de phosphate, permet également l'obtention d'une composition à l'état fondu présentant une viscosité plus stable que la composition témoin $C_T$ de PEKK.

Exemple 2 : mesures de viscosité sous azote et sous air

Plusieurs composés à base de PEKK ont été préparés par la technique de compoundage. Les différents composés sont réalisés avec une extrudeuse de plusieurs compositions à base de PEKK. Le comportement des différentes compositions à 380°C sous azote et sous air a été comparé.
Une première composition témoin $C_T$' de PEKK sous forme de granulés et ne comportant aucun stabilisant a été préparée.
Une deuxième composition à base de PEKK, référencée C5, a été préparée par la technique de coumpoundage dans laquelle du phosphate monosodique ($NaH_2PO_4$), de formule (1) ci-dessus, a été incorporé à hauteur de 1000ppm.
Une troisième composition à base de PEKK, référencée C6, a été préparée par la technique de coumpoundage dans laquelle du phosphate trisodique ($Na_3P_3O_9$), de formule (3) ci-dessus, a été incorporé à hauteur de 1000ppm.
Une quatrième composition à base de PEKK, référencée C7, a été préparée par la technique de compoundage, dans laquelle du ADK STAB NA-11UH (Sodium 2,2'-methylene- bis-(4,6-di-tert-butylphenyl)phosphate), de formule (5) ci-dessous, a été incorporé à hauteur de 1000ppm.

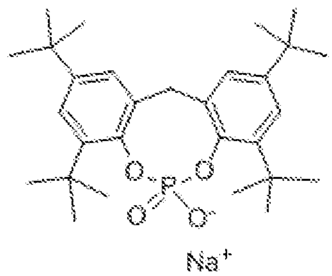

(5)

La viscosité à l'état fondu de ces compositions $C_T$', C5, C6 et C7 a ensuite été mesurée, avec un rhéomètre oscillatoire en fonction du temps à 380°C, sous azote puis sous air avec une fréquence d'oscillation, encore dénommée sollicitation, respectivement de 1Hz et de 0,1Hz et avec une amplitude de déformation de 0,5%.
Le tableau II ci-dessous regroupe les données de stabilité (EV%) sous azote et sous air de ces différentes compositions obtenues par coumpoundage avec ou sans stabilisant.

**Tableau II**

| Référence | composition | EV (%) (sous N2, 1Hz) | EV(%) (sous air, 0,1Hz) |
|---|---|---|---|
| $C_T$' | PEKK granulé | 230% | 390% |
| C5 | 1000ppm de phosphate monosodique anhydre | 30% | 115% |
| C6 | 1000ppm de phosphate trisodique anhydre | 45% | 115% |
| C7 | 1000ppm de phosphate de sodium 2, 2'-méthylène-bis-(4,6-di-tert-butylphenyl) | 15% | 2% |

Il ressort des résultats du tableau II que les sels de phosphate sont de bons stabilisants du PEKK aussi bien

sous azote que sous air. Le phénomène de stabilisation le plus surprenant réside dans le fait que, même sous air, la viscosité mesurée à l'état fondu reste relativement stable. Les sels de phosphate sont donc des agents stabilisant très efficaces vis-à-vis du phénomène de thermo-oxydation, et ceci même en présence d'air.

Exemple 3 : influence du ratio de sel de phosphate incorporé.

Plusieurs compositions à base de PEKK ont été préparées. Une composition témoin $C_T$ de PEKK ne comportant aucun stabilisant a été préparée par un procédé de synthèse classique par réaction de polycondensation. Les autres compositions sont à base de PEKK et comprennent chacune du phosphate trisodique anhydre à des teneurs différentes.

Les compositions comparées sont préparées par imprégnation aqueuse.

La composition référencée C8 dans le tableau III ci-dessous, comprend 500ppm de phosphate trisodique anhydre, tandis que la composition référencée C9 en comprend 1000ppm et que la composition référencée C10 en comprend 3000ppm.

La viscosité à l'état fondu de ces compositions $C_T$, C8, C9 et C10 a ensuite été mesurée, avec un rhéomètre oscillatoire en fonction du temps à 380°C, sous azote, avec une sollicitation de 1Hz et avec une amplitude de déformation de 0,5%.

Le tableau III ci-dessous regroupe les données de stabilité (EV%) sous azote de ces différentes compositions.

**Tableau III**

| Référence | composition | EV (%) (sous N2, 1Hz) |
|---|---|---|
| CT | PEKK de référence | 160% |
| C8 | 500ppm de phosphate trisodique anhydre | 50% |
| C9 | 1000ppm de phosphate trisodique anhydre | 45% |
| C10 | 3000ppm de phosphate trisodique anhydre | 10% |

Il ressort de ce tableau III que la stabilité dans le temps de la viscosité de la composition à l'état fondu augmente avec la teneur en sel de phosphate.

Exemple 4 : influence du cation

Plusieurs compositions à base de PEKK ont été préparées. Une composition témoin $C_T$ de PEKK ne comportant aucun stabilisant a été préparée par un procédé de synthèse classique par réaction de polycondensation. Les autres compositions sont à base de PEKK et comprennent chacune un dihydrogénophosphate de contre anion différent.

La composition référencée C11 dans le tableau IV ci-dessous, comprend 1000ppm de dihydrogénophosphate de sodium anhydre (de formule (1) ci-dessus), tandis que la composition référencée C12 comprend 1000ppm de dihydrogénophosphate d'ammonium.

La viscosité à l'état fondu de ces compositions $C_T$, C11 et C12 a ensuite été mesurée, avec un rhéomètre oscillatoire en fonction du temps, à 380°C, sous azote, avec une sollicitation de 1Hz et avec une amplitude de déformation de 0,5%.

Le tableau IV ci-dessous regroupe les données de stabilité (EV%) sous azote de ces différentes compositions.

**Tableau IV**

| Référence | composition | EV (%) (sous N2, 1Hz) |
|---|---|---|
| CT | PEKK de référence | 160% |
| C11 | 1000ppm de dihydrogénophosphate de sodium anhydre | 50% |
| C12 | 1000ppm de dihydrogénophosphate d'ammonium | 55% |

Il ressort de ce tableau IV, que la présence de dihydrogénophosphate d'ammonium ou de dihydrogénophosphate de sodium anhydre dans une composition à base de PEKK permet l'obtention d'une composition à l'état fondu qui présente une viscosité plus stable dans le temps, contrairement à la composition témoin CT dont la viscosité augmente rapidement avec le temps, indiquant des allongements de chaines et donc des évolutions importantes des caractéristiques du polymère.

Exemple 4 : stabilité thermique

Les sels de phosphate incorporés dans la composition à base de PAEK sont par ailleurs très stables thermiquement. En effet, pour les sels de phosphates, les pertes de poids mesurées correspondent à des pertes d'eau. Le phénomène qui se passe alors, par exemple avec le phosphate monosodique, est une déhydratation et une dimérisation conformément à l'équation (A) suivante :

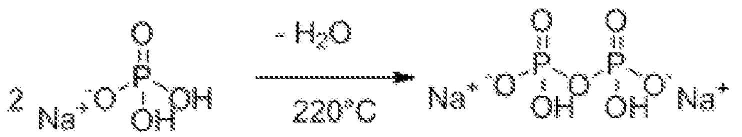


(A)

Le PEP-Q, quant à lui, commence à se dégrader et à émettre des composés organiques à une température de l'ordre de 200°C.

Les courbes de thermogravimétrie (TG) en fonction de la température T(°C) présentées sur le graphe de la Figure 2, permettent de mettre en évidence une perte de poids des sels de phosphates due à une perte d'eau, alors que le phosphonite PEP-Q se dégrade rapidement à partir de 200 °C en émettant des composés organiques volatils.

Les sels de phosphate présentent donc une grande stabilité thermique combinée à une grande stabilité vis-à-vis des phénomènes de thermo-oxydation.

Exemple 5 : Effet de nucléation additionnel des sels de phosphate

Une étude de cristallisation a été réalisée sur différents échantillons, référencés E1 à E4, de compositions différentes et répertoriés dans le tableau V ci-dessous.

L'étude de cristallisation est réalisée par calorimétrie différentielle à balayage, noté DSC. La DSC, de l'acronyme anglo-saxon « Differential Scanning Calorimetry », est une technique d'analyse thermique permettant de mesurer les différences des échanges de chaleur entre un échantillon à analyser et une référence.

Pour réaliser cette étude de cristallisation, on a utilisé l'équipement Q 2000 de la société TA instruments. L'étude a été menée en cristallisation anisotherme et isotherme.

Les échantillons étudiés se présentent sous forme de granulés. Un échantillon témoin à base de PEKK, référencé E1, est comparé à des échantillons E2 et E3 à base de PEKK et d'un sel de phosphate dans les mêmes proportions. Les différents échantillons sont plus particulièrement décrits dans le tableau V ci-dessous.

Cristallisation anisotherme

Le protocole de la DSC en anisotherme, sur les différents échantillons E1 à E3, consiste dans un premier temps à stabiliser la température à 20°C. La température est ensuite augmentée progressivement, selon une rampe de 20°C par minute jusqu'à 380°C, puis elle est à nouveau diminuée progressivement jusqu'à 20°C, selon une rampe inverse de 20°C par minute.

La cristallisation est étudiée durant l'étape de refroidissement. Le flux de chaleur est mesuré en fonction de la température, et une courbe représentant l'évolution du flux de chaleur en fonction de la température est obtenue pour chaque échantillon étudié. La température de cristallisation, notée Tc et exprimée en degrés Celsius, est ensuite déterminée pour chaque échantillon, en projetant sur l'axe des abscisses le maximum de la courbe correspondante. Cette détermination est réalisée directement par l'équipement de DSC utilisé. La température de cristallisation Tc mesurée pour chaque échantillon E1 à E3 est reportée dans le tableau V ci-dessous.

Cristallisation isotherme

Une analyse DSC en isotherme a en outre été réalisée sur les échantillons E1 à E3 pour mesurer le temps de demi-cristallisation. Pour cela, le protocole de la DSC isotherme comprend les trois étapes suivantes : une première étape consiste dans un premier temps à stabiliser la température à 20°C, une deuxième étape consiste ensuite à augmenter la température progressivement, selon une rampe de 20°C par minute, jusqu'à 380°C. Enfin, la température est diminuée de 380°C jusqu'à 315°C, selon une rampe de 20°C par minute, puis elle est stabilisée à 315°C pendant une heure.

Tableau V

| Référence échantillons | Description | $T_c$ (°C) | Temps de demi-cristallisation à 315°C (min) |
|---|---|---|---|
| E1 | Granulé PEKK témoin | 292 | 3,1 |
| E2 | Granulé (PEKK témoin + 1000ppm $NaH_2PO_4$) | 296 | 2,2 |
| E3 | Granulé (PEKK + 1000ppm $Na_3P_3O_9$) | 301 | 1,2 |

Il résulte du tableau V de résultats obtenus que le temps de demi-cristallisation est d'environ 3,1 minutes pour l'échantillon E1 de granulé de PEKK témoin. Le temps de demi-cristallisation d'un polymère est le temps nécessaire à la cristallisation de 50% de ce polymère.

Le temps de demi-cristallisation des échantillons E2 et E3 dont la composition comprend des sels de phosphate est diminué alors que la température de cristallisation augmente. Ce phénomène est dû à l'effet de nucléation des sels de phosphate. Ainsi, pour des gros barreaux obtenus avec une telle composition, l'effet de nucléation permet d'éviter l'apparition de grosses zones cristallisées et d'obtenir de bonnes propriétés mécaniques.

Concernant les granulés destinés à être utilisés en injection ou en extrusion, la cristallisation accélérée permet de contrôler la morphologie cristalline et notamment la taille des sphérolites, et d'assurer ainsi des propriétés mécaniques spécifiques et une constance de ces dernières.

Concernant les granulés destinés à être utilisés par voie d'imprégnation aqueuse, les sels de phosphates hydratés peuvent être utilisés dans la composition. Les sels de phosphates anhydres sont cependant préférés car de l'eau peut être libérée pendant le traitement ultérieur de la composition qui peut entrainer un éventuel effet négatif sur les propriétés physiques de la composition.

Les sels de phosphate sont donc de bons stabilisants des PAEK, et plus particulièrement, mais non exclusivement, des PEKK. Ces sels de phosphates combinent en outre plusieurs effets très avantageux. Ils procurent en effet une stabilité en température en absence ou en présence d'air et ils sont stables vis-à-vis de l'hydrolyse, à contrario d'autres stabilisants phosphorés tels que les phosphites ou les phosphonites comme le PEP-Q, et ne génèrent pas de composés organiques volatils mais simplement de la vapeur d'eau. Ils combinent en outre tous les effets positifs d'un stabilisant pour la transformation : ils permettent de limiter les évolutions de couleur lors de la transformation, ils permettent d'améliorer la stabilité de la structure à l'état fondu, réduisant de manière significative l'évolution des chaines polymères et permettant ainsi de conserver les propriétés cristallines et mécaniques du matériau. Enfin, ils agissent comme nucléant et régulateur d'acides résiduels (effet tampon), si bien qu'ils peuvent aussi aider à la protection des équipements contre la corrosion.

Les sels de phosphates peuvent en outre être facilement incorporés dans le polymère de PAEK, soit par imprégnation en solution aqueuse, soit par malaxage à sec, ou encore par compoundage.

Ils peuvent enfin être utilisés en synergie avec d'autres additifs, tels que d'autres stabilisants et/ou nucléants par exemple, et en présence de charge(s) continue(s) ou dispersée(s), et de plastifiants.

## Revendications

1. Procédé de stabilisation d'une composition à base de PAEK, ledit procédé comprenant une étape d'incorporation d'un agent stabilisant vis-à-vis de phénomènes de thermo-oxydation, ledit procédé étant caractérisé en ce l'agent stabilisant incorporé est un sel de phosphate, ou un mélange de sels de phosphate, **caractérisé en ce que** le sel de phosphate ou le mélange de sels de phosphate est incorporé dans la composition avec des proportions comprises entre 10ppm et 50000ppm.

2. Procédé selon la revendication 1, **caractérisé en ce que** l'incorporation du sel de phosphate dans la composition à base de PAEK est réalisée par l'une des techniques suivantes : mélangeage à sec, compoundage, imprégnation humide ou au cours du procédé de synthèse du polymère PAEK.

3. Procédé selon la revendication 1 ou 2, **caractérisé en ce que** le, ou les, sel(s) de phosphate est (sont) choisi(s) parmi au moins l'un des sels suivants : un (des) sel(s) de phosphate d'ammonium, de sodium, de calcium, de zinc, de potassium, d'aluminium, de magnésium, de zirconium, de baryum, de lithium, ou de terres rares.

4. Procédé selon l'une des revendications 1 à 3, **caractérisé en ce que** le, ou les, sel(s) de phosphate est (sont) plus

particulièrement choisi(s) parmi au moins l'un des composés suivants : phosphate monosodique anhydre, monohydraté ou dihydraté, phosphate disodique anhydre, dihydraté, heptahydraté, octahydraté, ou dodécahydraté, phosphate trisodique anhydre hexagonal, anhydre cubique, hémihydraté, hexahydraté, octahydraté, dodécahydraté, dihydrogénophsophate d'ammonium.

5. Procédé selon l'une des revendications 1 à 3, **caractérisé en ce que** le(s) sel(s) de phosphate est (sont) un (des) sel(s) de phosphate organométallique(s), et présentent la formule suivante :

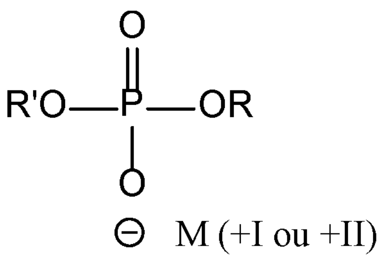

dans laquelle R est différent ou non de R', R et R' étant formés par un ou plusieurs groupements aromatiques substitués ou non par un ou plusieurs groupements possédant de 1 à 9 carbones, R et R' pouvant être directement liés entre eux ou séparés par au moins un groupement choisi parmi les groupement suivants : -CH2- ; - C(CH3)2- ; -C(CF3)2- ; -SO2- ; -S-, -CO- ; -O- et M représente un élément du groupe IA ou IIA de la classification périodique.

6. Procédé selon la revendication 4, **caractérisé en ce que** le sel de phosphate organométallique est le phosphate de sodium 2,2'-methylene-bis-(4,6-di-tert-butylphenyl).

7. Procédé selon l'une des revendications précédentes, **caractérisé en ce que** le sel de phosphate est incorporé dans la composition avec des proportions comprises entre 100 et 5000ppm.

8. Procédé selon l'une des revendications précédentes, **caractérisé en ce que** la composition à base de PAEK est plus particulièrement une composition à base de l'un des polymères suivants : PEKK, PEEK, PEEKK, PEKEKK, PEEEK ou PEDEK.

9. Procédé selon l'une des revendications précédentes, **caractérisé en ce que** la composition à base de PAEK est plus particulièrement une composition de poly-éther-cétone-cétone (PEKK).

10. Procédé selon la revendication 7, **caractérisée en ce que** la composition à base de PAEK est plus particulièrement une composition à base de PEKK, et comprend, en plus du PEKK, l'un au moins des polymères suivants : PEK, PEEKEK, PEEK, PEEKK, PEKEKK, PEEEK, PEDEK, avec une teneur de moins de 50% massique de la composition, de préférence inférieure ou égale à 30% massique de la composition.

**Patentansprüche**

1. Verfahren zur Stabilisierung einer Zusammensetzung auf Basis von PAEK, wobei das Verfahren einen Schritt des Einarbeitens eines Stabilisators gegen Thermooxidationsphänomene umfasst, wobei das Verfahren **dadurch gekennzeichnet ist, dass** es sich bei dem eingearbeiteten Stabilisator um ein Phosphatsalz oder eine Mischung von Phosphatsalzen handelt, **dadurch gekennzeichnet, dass** das Phosphatsalz oder die Mischung von Phosphatsalzen in Anteilen zwischen 10 ppm und 50.000 ppm in die Zusammensetzung eingearbeitet wird.

2. Verfahren nach Anspruch 1, **dadurch gekennzeichnet, dass** die Einarbeitung des Phosphatsalzes in die Zusammensetzung auf Basis von PAEK durch eine der folgenden Techniken durchgeführt wird: Trockenmischen, Compoundieren, Nassimprägnierung oder während des Verfahrens zur Synthese des PAEK-Polymers.

3. Verfahren nach Anspruch 1 oder 2, **dadurch gekennzeichnet, dass** das Phosphatsalz bzw. die Phosphatsalze aus mindestens einem der folgenden Salze ausgewählt wird bzw. werden: Ammonium-, Natrium-, Calcium-, Zink-, Kalium-, Aluminium-, Magnesium-, Zirconium-, Barium-, Lithium- oder Seltenerdmetall-phosphatsalz(en) .

4. Verfahren nach einem der Ansprüche 1 bis 3, **dadurch gekennzeichnet, dass** das Phosphatsalz bzw. die Phosphatsalze spezieller aus mindestens einer der folgenden Verbindungen ausgewählt wird bzw. werden: wasserfreiem Mononatriumphosphat, Mononatriumphosphatmonohydrat oder -dihydrat, wasserfreiem Dinatriumphosphat, Dinatriumphosphatdihydrat, -heptahydrat, -octahydrat oder -dodecahydrat, hexagonalem wasserfreiem Trinatriumphosphat, kubischem wasserfreiem Trinatriumphosphat, Trinatriumphosphathemihydrat, - hexahydrat, -octahydrat, -dodecahydrat und Ammoniumdihydrogenphosphat.

5. Verfahren nach einem der Ansprüche 1 bis 3, **dadurch gekennzeichnet, dass** das Phosphatsalz bzw. die Phosphatsalze ein metallorganisches Phosphatsalz bzw. metallorganische Phosphatsalze ist bzw. sind und die folgende Struktur aufweisen:

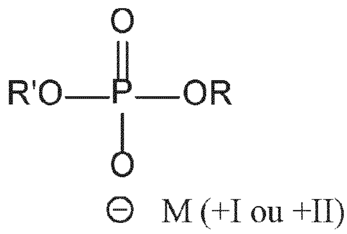

in der R von R' verschieden ist oder nicht, wobei R und R' durch eine oder mehrere aromatische Gruppen, die durch eine oder mehrere Gruppierungen mit 1 bis 9 Kohlenstoffatomen substituiert oder unsubstituiert sind, gebildet werden, wobei R und R' direkt aneinander gebunden oder durch mindestens eine aus den folgenden Gruppen ausgewählte Gruppe getrennt sein können: $-CH_2-$, $-C(CH_3)_2-$, $-C(CF_3)_2-$, $-SO_2-$, -S-, -CO-, -O-, und M für ein Element der Gruppe IA oder IIA des Periodensystems steht.

6. Verfahren nach Anspruch 4, **dadurch gekennzeichnet, dass** es sich bei dem metallorganischen Phosphatsalz um Natrium-2,2'-methylenbis(4,6-di-tert-butylphenyl)phosphat handelt.

7. Verfahren nach einem der vorhergehenden Ansprüche, **dadurch gekennzeichnet, dass** das Phosphatsalz in Anteilen zwischen 100 und 5000 ppm in die Zusammensetzung eingearbeitet wird.

8. Verfahren nach einem der vorhergehenden Ansprüche, **dadurch gekennzeichnet, dass** die Zusammensetzung auf Basis von PAEK spezieller eine Zusammensetzung auf Basis eines der folgenden Polymere ist: PEKK, PEEK, PEEKK, PEKEKK, PEEEK oder PEDEK.

9. Verfahren nach einem der vorhergehenden Ansprüche, **dadurch gekennzeichnet, dass** die Zusammensetzung auf Basis von PAEK spezieller eine Polyetherketonketon(PEKK)-Zusammensetzung ist.

10. Verfahren nach Anspruch 7, **dadurch gekennzeichnet, dass** die Zusammensetzung auf Basis von PAEK spezieller eine Zusammensetzung auf Basis von PEKK ist und zusätzlich zu PEKK mindestens eines der folgenden Polymere umfasst: PEK, PEEKEK, PEEK, PEEKK, PEKEKK, PEEEK, PEDEK, mit einem Gehalt von weniger als 50 Massen-% der Zusammensetzung, vorzugsweise kleiner oder gleich 30 Massen-% der Zusammensetzung.

## Claims

1. Process for the stabilization of a composition based on PAEK, said process comprising a step of incorporating an agent which stabilizes with regard to phenomena of thermal oxidation, said process being **characterized in that** the stabilizing agent incorporated is a phosphate salt or a mixture of phosphate salts, **characterized in that** the phosphate salt or the mixture of phosphate salts is incorporated into the composition in proportions of between 10 ppm and 50 000 ppm.

2. Process according to Claim 1, **characterized in that** the phosphate salt is incorporated into the composition based on PAEK by one of the following techniques: dry blending, compounding, wet impregnation or during the process for synthesizing the PAEK polymer.

3. Process according to Claim 1 or 2, **characterized in that** the phosphate salt(s) is (are) chosen from at least one of

the following salts: one (or more) phosphate salt(s) of ammonium, of sodium, of calcium, of zinc, of potassium, of aluminium, of magnesium, of zirconium, of barium, of lithium, or of rare earths.

**4.** Process according to one of Claims 1 to 3, **characterized in that** the phosphate salt(s) is (are) more particularly chosen from at least one of the following compounds: anhydrous monosodium phosphate, monosodium phosphate monohydrate or monosodium phosphate dihydrate, anhydrous disodium phosphate, disodium phosphate dihydrate, disodium phosphate heptahydrate, disodium phosphate octahydrate or disodium phosphate dodecahydrate, anhydrous hexagonal trisodium phosphate, anhydrous cubic trisodium phosphate, trisodium phosphate hemihydrate, trisodium phosphate hexahydrate, trisodium phosphate octahydrate, trisodium phosphate dodecahydrate, or ammonium dihydrogen phosphate.

**5.** Process according to one of Claims 1 to 3, **characterized in that** the phosphate salt(s) is (are) one (or more) organometallic phosphate salt(s), and have the following formula:

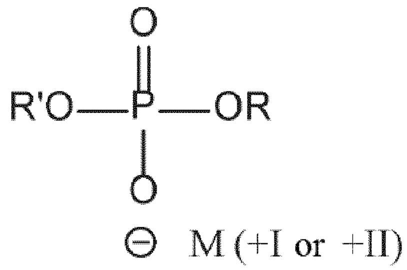

wherein R is or is not different from R', R and R' being formed by one or more aromatic groups which are substituted or unsubstituted by one or more groups having from 1 to 9 carbons, R and R' possibly being directly linked to one another or separated by at least one group chosen from the following groups: -CH2-; -C(CH3)2-; - C(CF3)2-; -SO2-; -S-; -CO-; -O-, and M represents an element from Group IA or IIA of the Periodic Table.

**6.** Process according to Claim 4, **characterized in that** the organometallic phosphate salt is sodium 2,2'-methylenebis(4,6-di-tert-butylphenyl) phosphate.

**7.** Process according to one of the preceding claims, **characterized in that** the phosphate salt is incorporated into the composition in proportions of between 100 and 5000 ppm.

**8.** Process according to one of the preceding claims, **characterized in that** the composition based on PAEK is more particularly a composition based on one of the following polymers: PEKK, PEEK, PEEKK, PEKEKK, PEEEK or PEDEK.

**9.** Process according to one of the preceding claims, **characterized in that** the composition based on PAEK is more particularly a poly(ether ketone ketone) (PEKK) composition.

**10.** Process according to Claim 7, **characterized in that** the composition based on PAEK is more particularly a composition based on PEKK, and comprises, in addition to the PEKK, at least one of the following polymers: PEK, PEEKEK, PEEK, PEEKK, PEKEKK, PEEEK, PEDEK, with a content of less than 50% by weight of the composition, preferably less than or equal to 30% by weight of the composition.

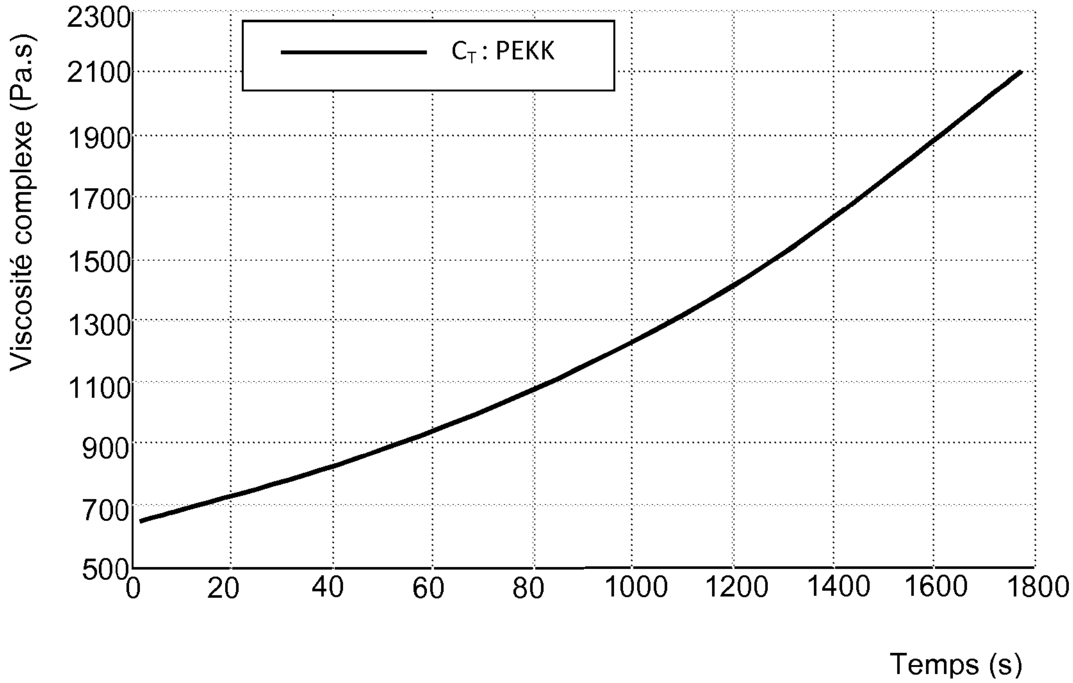

Viscosité complexe (Pa.s)
2300
2100
1900
1700
1500
1300
1100
900
700
500
$C_T$ : PEKK
0
20
40
60
80
1000
1200
1400
1600
1800
Temps (s)


**FIG.1**

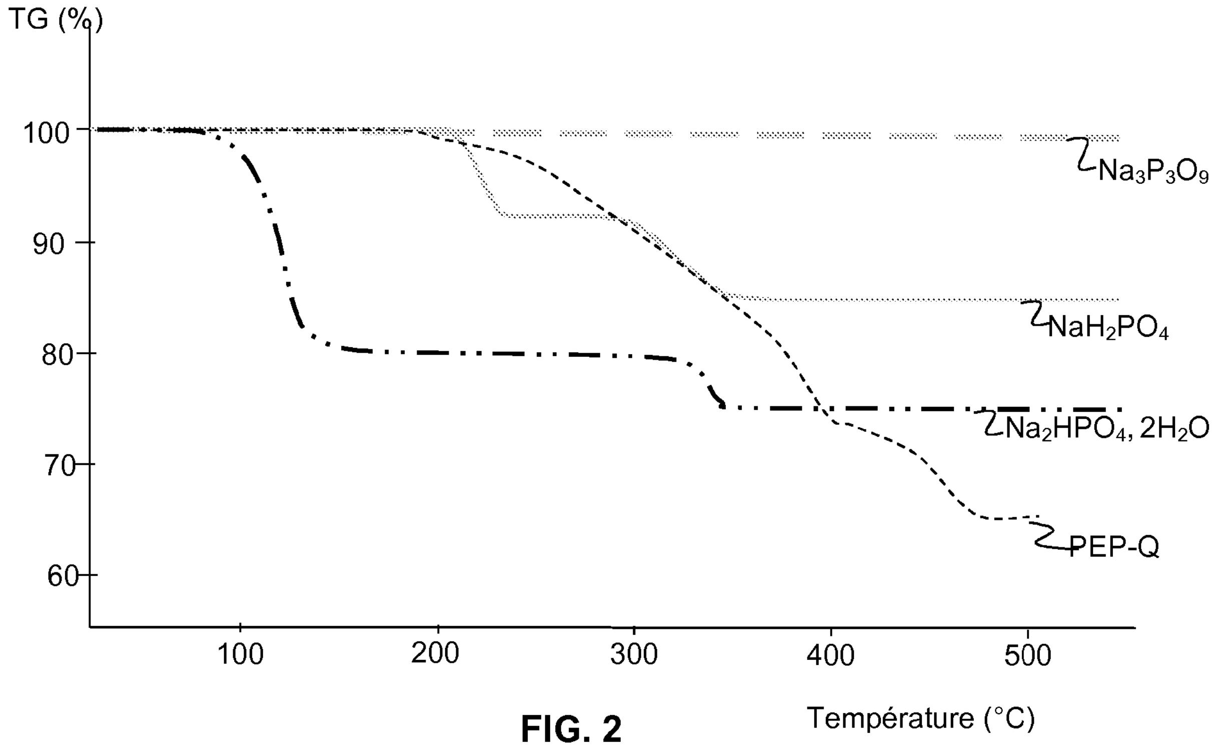

TG (%)
100
90
80
70
60
$Na_3P_3O_9$
$NaH_2PO_4$
$Na_2HPO_4$, $2H_2O$
PEP-Q
100
200
300
400
500
Température (°C)


**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5208278 A
- US 3925307 A
- US 4593061 A
- US 5063265 A
- US 5145894 A
- WO 2013164855 A
- WO 9001510 A
- US 3794615 A
- EP 0933395 A
- US 20130281587 A


### Littérature non-brevet citée dans la description


- **K.K.C.HO.** Wet imprégnation as route to unidirectional carbon fibre reinforced thermoplastic composites manufacturing. *Plastics, Rubber and composites,* 2011, vol. 40 (2), 100-107